Europäisches Patentamt

European Patent Office

Office européen des brevets

(11) Numéro de publication : **0 408 460 B1**

# (12) FASCICULE DE BREVET EUROPEEN

(45) Date de publication du fascicule du brevet :
31.08.94 Bulletin 94/35

(51) Int. Cl.⁵ : **H04N 7/00, H04N 7/12**

(21) Numéro de dépôt : **90402017.9**

(22) Date de dépôt : **12.07.90**

(54) **Procédé et système de diffusion de programme de télévision à haute définition.**

(30) Priorité : **12.07.89 FR 8909415**

(43) Date de publication de la demande :
**16.01.91 Bulletin 91/03**

(45) Mention de la délivrance du brevet :
**31.08.94 Bulletin 94/35**

(84) Etats contractants désignés :
**DE GB IT NL SE**

(56) Documents cités :
**EP-A- 0 316 232**
**BETTER VIDEO IMAGES, 23RD ANNUAL**
**SMPTE TELEVISION CONFERENCE, San**
**Francisco, CA, 3-4 février 1989, pages 296-311;**
**W. BRETL et al.: "Spectrum compatible**
**high-definition television transmission sys-**
**tem"**

(56) Documents cités :
**CONTRIBUTION TO THE CLUB DE RENNES**
**YOUNG RESEARCHERS' SEMINAR (Les Assi-**
**ses des Jeunes Chercheurs), M.I.T. Cam-**
**bridge, Mass., 9-13 octobre 1988, pages 1-20;**
**F.W.P. VREESWIJK: "HD-MAC coding for**
**broadcasting of high-definition television**
**signals"**

(73) Titulaire : **FRANCE TELECOM**
**6, Place d'Alleray**
**F-75015 Paris (FR)**
Titulaire : **Etablissement Public Télédiffusion**
**de France**
**10, rue d'Oradour-sur-Glane**
**F-75015 Paris (FR)**

(72) Inventeur : **Bernard, Philippe**
**Rue du Clos Courtel**
**F-35510 Cesson Sévigné (FR)**

(74) Mandataire : **Fort, Jacques**
**CABINET PLASSERAUD**
**84, rue d'Amsterdam**
**F-75009 Paris (FR)**

# Description

La présente invention concerne les procédés et systèmes de diffusion de programmes de télévision à haute définition, dite TVHD, destinés à fournir des images ayant un nombre de lignes et de points par ligne beaucoup plus élevé que celui des normes actuelles par exemple avec 1 250 lignes (au lieu de 625 lignes actuellement) et un nombre de points par ligne doublé. Elle trouve une application particulièrement importante dans la diffusion de programmes sous la forme dite HDMAC.

On a déjà proposé divers procédés de compression d'informations visant à réduire la largeur de bande requise pour l'image TVHD à celle qui est disponible sur les canaux de diffusion par satellite ou même terrestre. Ces procédés impliquent un sous-échantillonnage à l'émission et une interpolation à la réception. On peut notamment acheminer une image haute définition à faible activité temporelle, (c'est-à-dire où les modifications sont faibles d'une image à la suivante) dans un canal de transmission étroit, en étalant les informations spatiales d'une image sur plusieurs trames de télévision successives. Les principes de la diffusion en HDMAC sont décrits dans le document CCIR n° 11/-6 2 013 du 12 janvier 1989, intitulé "HDMAC bandwidth reduction coding principles", auquel on pourra se reporter.

Le document EP-A-0 316 232 décrit et revendique notamment un procédé de diffusion de programmes de télévision à haute définition sur un canal de transmission de capacité inférieure à la bande spectrale du signal d'image, procédé suivant lequel on effectue à l'émission un sous-échantillonnage de l'image répartissant l'information spatiale sur n trames successives (n étant un nombre entier supérieur à 1) et à la réception un filtrage d'interpolation, et on soumet l'image codée à haute définition à un filtrage d'atténuation temporelle de l'énergie dans la région proche de $f_0/n$ ($f_0$ étant la fréquence d'image) après codage haute définition et avant émission et à un filtrage d'accentuation temporelle correspondant à l'atténuation avant décodage haute définition à la réception.

Ce procédé donne des résultats relativement satisfaisants pour les zones d'image à activité temporelle faible ou nulle lorsqu'elles sont spatialement relativement homogènes.

La présente invention vise notamment à améliorer encore la qualité de ces zones d'image, où l'oeil est beaucoup plus sensible aux dégradations de la définition que dans les zones à forte activité temporelle, et à faciliter également les transitions en début et en fin de séquence temporelle à activité faible.

Dans ce but, l'invention propose de rendre le degré d'atténuation temporelle adaptatif à l'activité spatiale locale, c'est-à-dire au contenu spectral local, de l'image. Plus particulièrement, l'invention propose un procédé conforme à la revendication 1.

L'invention permet également d'obtenir une image compatible, (c'est-à-dire l'image fournie par un récepteur de première génération incapable d'utiliser toutes les informations de TVHD), à partir du signal TVHD sans apporter à ce dernier des modifications susceptibles de dégrader de façon appréciable l'image haute définition restituée par un récepteur TVHD.

L'invention propose également un émetteur et un récepteur permettant de mettre en oeuvre le procédé ci-dessus défini dans un système de diffusion.

L'invention sera mieux comprise à la lecture de la description qui suit d'un mode particulier de réalisation, donné à titre d'exemple non limitatif, destiné à la diffusion de programmes de télévision en HDMAC où la luminance des pixels des zones à activité temporelle faible ou nulle s'effectue avec une structure d'analyse d'image en quinconce de lignes sur quatre trames avec brassage ou "Shuffling" vertical. La description se réfère aux dessins qui l'accompagnent, dans lesquels :

- la figure 1 est un synoptique montrant une constitution possible d'un module d'atténuation suivant l'invention ;
- la figure 2 est un synoptique montrant une constitution possible des discriminateurs spatiaux de la figure 1 ;
- la figure 3 est un schéma montrant un exemple de filtrage spatial, sur des zones successives ayant chacune trois pixels sur trois lignes successives ;
- la figure 4, similaire à la figure 3, est un synoptique de module d'accentuation utilisable dans un système de diffusion dont l'émetteur comporte un module d'atténuation du genre montré en figure 1.

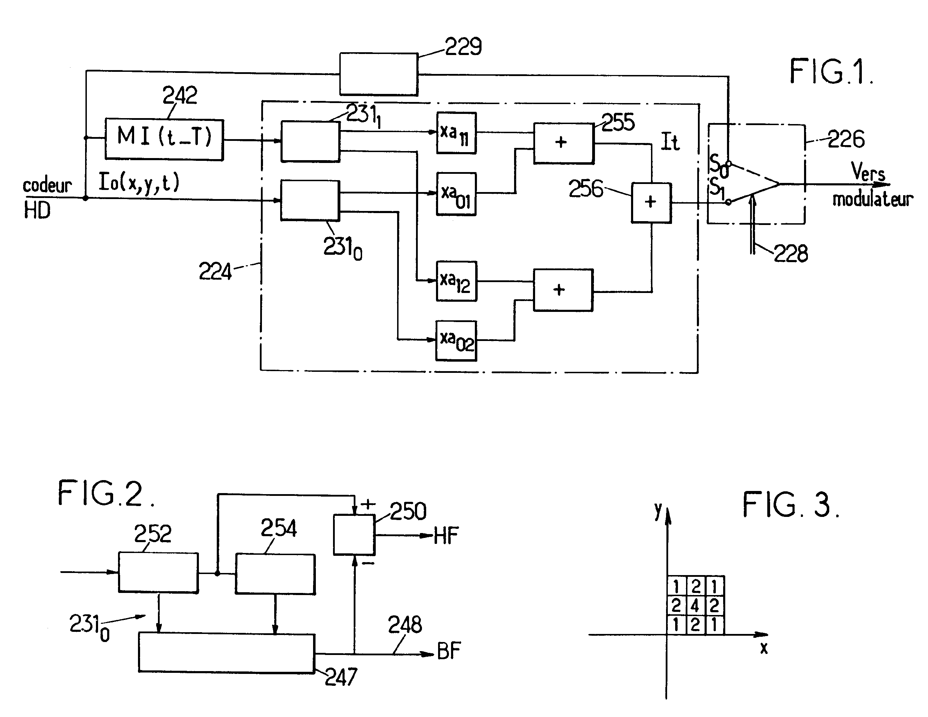

La mise en oeuvre du procédé selon l'invention sera décrite dans le cas d'une image HD dont les parties à activité temporelle faible ou nulle sont analysées avec une structure en quinconce de lignes et avec sous-échantillonnage temporel par répartition du contenu spatial de l'image sur quatre trames de transmission, la transmission s'effectuant avec brassage vertical comme cela est montré en figures 1 et 2 du document EP-A-0 316 232.

Dans le cas d'une image HD à entrelacement à 50 Hz, la période de répétition d'image est de 1/25 de seconde et une structure complète est transmise en 80 ms.

Le filtrage temporel d'atténuation est réalisé entre le codage, au cours duquel est effectué le sous-échantillonnage, et la modulation. Dans le cas montré en figure 1, le module de filtrage d'atténuation a une ouverture temporelle de deux images (ce nombre n'étant pas limitatif). Le filtrage d'atténuation est de type transversal et le filtrage d'atténuation à la réception est récursif.

Le module d'atténuation montré en figure 1 comporte, comme celui montré en figure 8a du document EP-A-0 316 232, une mémoire vive 242 affectée à l'image au temps t-T (T étant la période de répétition des trames paires ou impaires, c'est-à-dire 40 ms dans le cas du standard européen). La mémoire 242 est suivie du filtre numérique d'adaptation 224 qui reçoit simultanément le signal(de luminance par exemple) d'un pixel de l'image au temps t et le signal du pixel correspondant au temps t-T de sorte que le filtre 224 met en jeu une correspondance pixel à pixel dans deux plans temporels successifs. Le filtre 224 est suivi d'un commutateur 226 qui permet de relier la sortie du module atténuateur soit à la sortie $S_1$ du filtre, soit à la sortie $S_0$ d'un élément de retard 229 qui fournit les signaux de sortie du codeur avec un retard correspondant à la durée de traitement par le filtre 224. Le commutateur 226 est commandé par l'information de mouvement 228 provenant du codeur.

La constitution décrite jusqu'à présent est similaire à celle définie dans le document EP-A-O 316 232. Mais, conformément à l'invention, le filtre 224 comporte deux branches au moins, correspondant à des fréquences spatiales différentes et ayant des coefficients d'atténuation différents. Chacune de ces branches reçoit encore d'une part le signal direct provenant du codeur, d'autre part le signal retardé, mais pour des parties du spectre spatial qui ne sont pas les mêmes pour les deux branches.

Chacune des deux branches a une constitution comparable à celle décrite dans le document EP-A-0 316 232. Pour la branche supérieure par exemple, l'atténuation est telle que la relation entre la valeur transmise $I_{1t}(x,y,t)$ pour le point (x,y) est reliée aux valeurs initiales pour le même point de coordonnées $I_0$ (x,y,t) et $I_0$ (x,y,t-T) par la relation :

$$I_{1t}(x,y,t) = a_{01} I_0 (x,y,t) + a_{11} I_0 (x,y,t - T)$$

La branche inférieure du filtre d'atténuation 224 a la même constitution que la première, mais avec des coefficients de filtrage temporel $a_{02}$ et $a_{12}$ différents, de sorte que la valeur $I_2(x,y,t)$ transmise est reliée aux valeurs initiales par la relation d'atténuation temporelle :

$$I_{2t}(x,y,t) = a_{02} I_0 (x,y,t) + a_{12} I_0 (x,y,t - T)$$

Le filtre comporte encore deux discriminateurs $231_0$ et $231_1$ destinés à fractionner l'énergie des signaux d'entrée $I_0$ (x,y,t) et $I_0$ (x,y,t-T) en une partie correspondant aux basses fréquences spectrales au voisinage du pixel traité (de coordonnées x,y), qui est appliquée à la première branche, et une partie correspondant aux hautes fréquences spatiales, qui est appliquée à la seconde branche. Le discriminateur $231_0$ traite le signal à l'instant t, en phase avec la source ; le discriminateur $231_1$ traite le signal retardé de T, fourni par la mémoire 242.

Etant donné que le filtrage basse fréquence est facile à réaliser, chaque discriminateur $231_0$ ou $231_1$ comporte avantageusement un filtre spatial qui fournit directement la partie basse fréquence et un soustracteur auquel sont appliqués le signal à traiter et la sortie du filtre spatial. La figure 2 montre une telle constitution du filtre $231_0$ : le filtre spatial 247 fournit directement le signal basse fréquence sur sa sortie 248. Le signal haute fréquence est fourni par un soustracteur 250.

Différents types de filtre spatial sont utilisables. Chaque filtre spatial 247, constitué de façon classique par des multiplieurs et un soustracteur, reçoit les données d'entrée directes et retardées par l'intermédiaire de mémoires en cascade 252, 254 ayant une capacité correspondant au voisinage sur lequel est effectué le filtrage (par exemple à trois pixels sur chacune de trois lignes successives). La figure 3 montre un mode de filtrage utilisable ; la luminance des 3x3 pixels est affectée du coefficient de pondération 4 pour le pixel considéré, 2 pour les quatre plus proches, 1 pour les pixels éloignés.

Les coefficients a des branches du filtre 224 peuvent varier dans des limites importantes et les rapports $a_{01}$ / $a_{02}$ sont choisis notamment en fonction des caractéristiques des discriminateurs de filtrage spatial.

Dans la pratique, l'atténuation sera de 0 à 6 dB pour la partie basse fréquence, de 4 à 10 dB pour la partie haute fréquence. Si par exemple on adopte des valeurs de a égales à 3 dB et 6 dB respectivement, les coefficients pouvant être :

$a_{01} = 0,85$

$a_{11} = 0,15$

$a_{02} = 0,75$

$a_{12} = 0,25$

Les signaux de sortie des deux branches sont ensuite additionnés d'abord dans chaque branche par des sommateurs numériques 255, puis dans un sommateur numérique 256 dont la sortie constitue la sortie $S_1$ du filtre 224.

Un avantage annexe de l'inventeur est qu'il sera souvent inutile de traiter différemment les débuts et fins de séquences à faible activité temporelle, le filtrage spatial assurant les transitions nécessaires.

Le circuit de commutation 226 peut avoir la constitution déjà décrite dans le document EP-A-0 316 232.

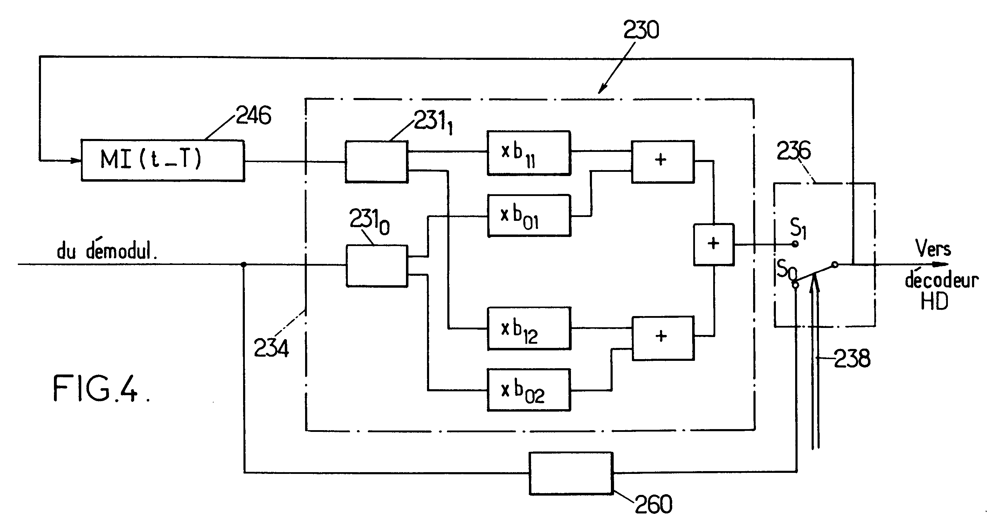

Le module d'accentuation 230 situé dans les récepteurs HD a une constitution complémentaire de celle du module d'atténuation. Cette constitution sera celle montrée en figure 4 si le module d'atténuation est celui de la figure 1.

Le filtre d'accentuation 234, de type purement récursif, reçoit le signal d'entrée, provenant des circuits de réception et de démodulation, d'une part directement, d'autre part par l'intermédiaire d'une mémoire d'image 246 réalimentée par le commutateur de sortie 236. Ce filtre a les mêmes discriminateurs $231_0$ et $231_1$ et la même constitution à deux branches que le filtre d'atténuation 224, mais avec des coefficients de pondération temporelle complémentaires ;

$b_{01} = 1/a_{01}$        $b_{02} = 1/a_{O2}$

$b_{11} = 1-b_{01}$        $b_{12} = 1-b_{02}$

où a est la valeur de l'atténuation pour la fréquence $f_t$ d'échantillonnage de l'image, c'est-à-dire :

$f_t = (50/4)$ Hz dans le cas envisagé ici.

Les composants supplémentaires du système, notamment le commutateur 236, peuvent être ceux déjà décrits dans le document EP-A-0 316 232 auquel on pourra se reporter ; le commutateur fournit au décodeur soit le signal traité, soit le signal direct avec un retard fourni par l'élément 260.

L'invention est susceptible de nombreuses variantes de réalisation. En particulier elle est applicable quelle que soit l'ouverture temporelle du filtre d'atténuation. Le voisinage de détermination d'activité spatiale peut être différent de celui donné plus haut. Enfin l'invention peut être utilisée en combinaison avec le procédé d'amélioration d'image compatible décrit dans la demande FR n° 88 08096 du 16 juin 1988, publiée sous le numéro FR-A- 2 633 136 le 22.12.1989.

**Revendications**

1. Procédé de diffusion de programmes de télévision à haute définition sur un canal de transmission de capacité inférieure à la bande spectrale du signal d'image, procédé suivant lequel on effectue :

   - à l'émission, un sous-échantillonnage de l'image répartissant l'information spatiale sur n trames successives, n étant un nombre entier supérieur à 1 , et un filtrage temporel (224) d'atténuation de l'énergie dans la région proche de $f_0/n$, $f_0$ étant la fréquence trame d'analyse, après codage haute définition et avant émission ;

   - et, à la réception, un filtrage d'interpolation et un filtrage temporel d'accentuation (234) correspondant à l'atténuation, avant décodage haute définition,

   caractérisé en ce qu'on rend le degré d'atténuation temporelle adaptatif à l'activité spatiale locale de l'image, c'est-à-dire au contenu spectral local du spectre de fréquences spatiales de l'image.

2. Procédé selon la revendication 1, caractérisé en ce qu'on donne à l'atténuation et à l'accentuation une valeur plus forte dans les zones d'image à énergie spatiale élevée, c'est-à-dire riches en composantes de haute fréquence spatiale de haute amplitude, que dans les zones à énergie spatiale réduite.

3. Procédé selon la revendication 1 ou 2, caractérisé en ce que, au cours de l'atténuation, on soumet l'image à une discrimination d'activité spatiale portant sur le voisinage de chaque pixel courant à son tour et on soumet le signal correspondant à l'image à basses fréquences spatiales et celui correspondant aux hautes fréquences spatiales provenant de la discrimination à des filtrages d'atténuation temporelle avec des coefficients différents, avant sommation.

4. Procédé selon la revendication 3, caractérisé en ce que la discrimination est effectuée par filtrage basse fréquence spatiale et soustraction de l'énergie basse fréquence de l'énergie totale, c'est-à-dire par soustraction du signal obtenu par filtrage du signal image.

5. Procédé selon la revendication 4, caractérisé en ce que le filtrage spatial basse fréquence est effectué sur cinq pixels de cinq lignes successives, adjacents au pixel courant.

6. Procédé selon l'une quelconque des revendications précédentes, caractérisé en ce que le filtrage temporel d'atténuation est tel que la valeur $I_t(x,y,t)$ transmise après atténuation en un point $(x,y)$ et à l'instant t soit liée à la valeur initiale $I_0$ au même point et à l'instant t par la relation :

   $It(x,y,t) = a0I0(x,y,t) + a_{-1} I_0(x,y,t - T)$

   où T est la période de répétition d'image,

   $a_0 = (1+a)/2$

   $a_{-1} = (1-a)/2$

   a étant l'atténuation recherchée pour la fréquence $f_0/n$, et où n est le nombre de trames correspondant à l'ouverture temporelle,

   et en ce que l'accentuation est telle que la valeur $I_r(x,y,t)$ soit liée à la valeur transmise $I_t$ par la relation :

   $I_r(x,y,t) = b_0 I_t(x,y,t) + b_{-1} I_r(x,y,t - T)$

   où $b_0 = 1/a_0$ et $b_{-1} = 1/b_0$

   a ayant des valeurs différentes pour l'énergie haute fréquence et l'énergie basse fréquence spatiale.

7. Procédé selon la revendication 5, caractérisé en ce que l'atténuation a est comprise entre 0 et 6 dB pour l'énergie basse fréquence et comprise entre 1 et 10 dB pour l'énergie haute fréquence.

8. Système de diffusion de programmes de télévision haute définition mettant en oeuvre le procédé selon l'une quelconque des revendications 1 à 7, comprenant un émetteur et un récepteur haute définition, caractérisé en ce que l'émetteur comporte, entre codeur haute définition et modulateur d'émission, un module d'atténuation temporelle et en ce que le récepteur comporte un module d'accentuation temporelle (230) intercalé entre le démodulateur et le décodeur haute définition, chacun des modules comprenant au moins deux branches correspondant à des fréquences différentes dans le spectre des fréquences spatiales de l'image et des discriminateurs ($231_0$,$231_1$) de répartition d'énergie correspondant auxdites fréquences différentes entre les branches, le nombre de discriminateurs ($230_0$,$231_1$) correspondant au nombre de trames représentant l'ouverture temporelle sur laquelle sont effectuées l'atténuation et l'accentuation, l'accentuation dans le récepteur correspondant à l'atténuation dans l'émetteur.

9. Récepteur de programme de télévision haute définition transmis par le procédé suivant l'une quelconque des revendications 1 à 7, comprenant des circuits de réception et de démodulation, un module d'accentuation temporelle (230) et un décodeur haute définition, caractérisé en ce que le module d'accentuation comprend au moins deux branches correspondant à des fréquences différentes dans le spectre des fréquences spatiales de l'image et des discriminateurs ($231_0$,$231_1$) de répartition d'énergie correspondant auxdites fréquences différentes entre les branches, en nombre correspondant à l'ouverture temporelle sur laquelle est effectuée l'accentuation, et un sommateur numérique de sortie, et en ce que chaque branche est constituée de multiplicateurs recevant chacun une sortie des discriminateurs respectifs et correspondant auxdites fréquences différentes associées à ladite branche, et la multipliant par un coefficient d'accentuation ($b_{01}$,$b_{02}$,$b_{11}$,$b_{12}$), et d'un sommateur de sortie, les coefficients étant plus faibles pour les fréquences spatiales élevées de l'image.

**Patentansprüche**

1. Verfahren zur Sendung von Fernsehprogrammen mit hoher Auflösung auf einem Kanal mit geringerer Übertragungskapazität als das Spektralband des Bildsignals, gemäß welchem Verfahren ausgeführt wird:
    - beim Senden eine Teilabtastung des Bildes, wobei die räumliche Information auf n aufeinanderfolgende Teilbilder verteilt wird, wobei n eine ganze Zahl größer als 1 ist, und eine Zeitfilterung (224) zur Dämpfung der Energie im Bereich nahe $f_0$/n, wobei $f_0$ die Analysenteilbild-Frequenz nach Hochauflösungscodierung und vor Sendung ist;
    - und beim Empfang eine Interpolationsfilterung und eine Zeitfilterung zur Anhebung (234) entsprechend der Dämpfung vor Hochauflösungsdecodierung,
dadurch **gekennzeichnet**, daß der Zeitdämpfungsgrad anpassend an die räumliche lokale Aktivität des Bildes gemacht wird, d.h. an den lokalen spektralen Inhalt des Spektrums räumlicher Frequenzen des Bildes.

2. Verfahren nach Anspruch 1, dadurch **gekennzeichnet**, daß der Dämpfung und der Anhebung ein stärkerer Wert in den Bildzonen mit großer räumlicher Energie gegeben wird, das heißt reich an Komponenten hoher räumlicher Frequenz hoher Amplitude, als in den Zonen mit herabgesetzter räumlicher Energie.

3. Verfahren nach Anspruch 1 oder 2, dadurch **gekennzeichnet**, daß das Bild im Verlauf der Dämpfung einer Diskrimination räumlicher Aktivität unterzogen wird, die in der Nähe jedes laufenden Pixels seinerseits liegt, und das Signal entsprechend dem Bild mit niedrigen räumlichen Frequenzen, und dasjenige entsprechend den hohen räumlichen Frequenzen, herrührend von der Diskrimination, Zeitdämpfungsfilterungen mit unterschiedlichen Koeffizienten vor Summierung unterzogen wird.

4. Verfahren nach Anspruch 3, dadurch **gekennzeichnet**, daß die Diskrimination durch räumliche Niederfrequenzfilterung und Subtraktion der Niederfrequenzenergie von der Gesamtenergie ausgeführt wird, d.h. durch Subtraktion des erhaltenen Signals durch Filterung des Bildsignals.

5. Verfahren nach Anspruch 4, dadurch **gekennzeichnet**, , daß die räumliche Niederfrequenzfilterung an fünf Pixeln von fünf aufeinanderfolgenden Zeilen, benachbart dem laufenden Pixel, ausgeführt wird.

6. Verfahren nach einem beliebigen der vorhergehenden Ansprüche, dadurch **gekennzeichnet**, daß die Zeitfilterung zur Dämpfung derart ist, daß der übertragene Wert $I_t(x, y, t)$ nach Dämpfung in einem Punkt (x, y) und zum Zeitpunkt t mit dem Anfangswert $I_0$ im selben Punkt und zum Zeitpunkt t durch die Relation verbunden ist:
    $$I_t(x, y, t) = a_0 I_0(x, y, t) + a_{-1} I_0(x, y, t - T)$$
wobei T die Bildwiederholungsperiode ist,
$a_0 = (1+a)/2$
$a_{-1} = (1-a)/2$
wobei a die gesuchte Dämpfung für die Frequenz $f_0$/n ist und wobei n die Teilbildzahl entsprechend der Zeitöffnung ist, und daß die Anhebung derart ist, daß der Wert $I_t(x, y, t)$ mit dem übertragenen Wert $I_t$ durch die Relation verbunden ist:
    $$I_t(x, y, t) = b_0 I_t(x, y, t) + b_{-1} I_t(x, y, t - T)$$

wobei $b_0 = 1/a_0$ und $b_{-1} = 1/b_0$
wobei a unterschiedliche Werte für die Hochfrequenzenergie und die räumliche Niederfrequenzenergie aufweist.

7. Verfahren nach Anspruch 5, dadurch **gekennzeichnet**, daß die Dämpfung a zwischen 0 und 6 dB für die Niederfrequenzenergie enthalten ist und zwischen 1 und 10 dB für die Hochfrequenzenergie enthalten ist.

8. System zur Sendung von Fernsehprogrammen mit hoher Auflösung, bei dem das Verfahren gemäß einem beliebigen der Ansprüche 1 bis 7 ausgeführt wird, umfassend einen Sender und einen Empfänger mit hoher Auflösung, dadurch **gekennzeichnet**, daß der Sender zwischen dem Hochauflösungscodierer und Sendemodulator ein Zeitdämpfungsmodul umfaßt und daß der Empfänger ein Zeitanhebungsmodul (230) umfaßt, das zwischen dem Demodulator und dem Hochauflösungsdecodierer zwischengeschaltet ist, wobei jedes der Module wenigstens zwei Zweige entsprechend unterschiedlichen Frequenzen im Spektrum der räumlichen Frequenzen des Bildes und Diskriminatoren ($231_0$, $231_1$) zur Energieverteilung entsprechend den unterschiedlichen Frequenzen zwischen den Zweigen aufweist, wobei die Zahl der Diskriminatoren ($231_0$, $231_1$) entsprechend der Teilbildzahl die Zeitöffnung darstellt, über der die Dämpfung und die Anhebung ausgeführt worden sind, wobei die Anhebung im Empfänger der Dämpfung im Sender entspricht.

9. Empfänger für Fernsehprogramme mit hoher Auflösung, empfangen durch das Verfahren gemäß einem beliebigen der Ansprüche 1 bis 7, umfassend Empfänger- und Demodulationskreise, ein Zeitanhebungsmodul (230) und einen Hochauflösungsdecodierer, dadurch **gekennzeichnet**, daß das Anhebungsmodul wenigstens zwei Zweige entsprechend unterschiedlichen Frequenzen im Spektrum der räumlichen Frequenzen des Bildes und Diskriminatoren ($231_0$, $231_1$) zur Energieverteilung entsprechend den unterschiedlichen Frequenzen zwischen den Zweigen, in der Zahl entsprechend der Zeitöffnung, über die die Anhebung ausgeführt worden ist, und einen digitalen Ausgangssummierer aufweist, und daß jeder Zweig aus Multiplizierern, die jeweils ein Ausgangssignal der entsprechenden Diskriminatoren und entsprechend den dem Zweig zugeordneten unterschiedlichen Frequenzen empfangen und es mit einem Anhebungskoeffizienten ($b_{01}$, $b_{02}$, $b_{11}$, $b_{12}$) multiplizieren, und aus einem Ausgangsmultiplizierer bestehen, wobei die Koeffizienten für die hohen räumlichen Frequenzen des Bildes niedriger sind.

## Claims

1. Method for broadcasting high definition television programs over a transmission channel having a capacity lower than the spectral band of the image signal, wherein the following steps are carried out:
   - on transmission, sub-sampling the image for distributing the spatial information over n successive fields, n being an integer greater than 1, and time filtering (224) for attenuating the energy in a zone close to $f_0/n$, $f_0$ being the frequency of field analysis, after high definition and encoding and before transmission,
   - and, on reception, interpolation filtering and enhancement time filtering (234) of an amount corresponding to the degree of attenuation, before high definition decoding, characterized in that the degree of time attenuation is adapted to the local spatial activity of the image, i.e. to the local spectral content of the spatial frequency spectrum of the image.

2. Method according to claim 1, characterized in that the degrees of attenuation and enhancement have a higher value in the zones of image having a higher degree of spatial energy, i.e. having a large content of high amplitude high spatial frequency components, than in the zones having a lower spatial energy.

3. Method according to claim 1 or 2, characterized in that,
   during attenuation, the image is subjected to a spatial activity discrimination relating to the neighborhood of each current pixel in turn and the signal corresponding to the image having lower spatial frequencies and
   the signal corresponding to the image having low spatial frequencies and that corresponding to high spatial frequencies, resulting from discrimination, are subjected to time attenuation filtering with different coefficients, before they are summed.

4. Method according to claim 3, characterized in that said discrimination is carried out by low spatial frequency filtration and subtraction of the lower frequency energy from the total energy, i.e. by subtracting the signal which is obtained by filtering the image signal.

5. Method according to claim 4, characterized in that the low frequency spatial filtering is carried out on five pixels of five successive lines, adjacent to the current pixel.

6. Method according to any one of the preceding claims, characterized in that the attenuation time filtering is such that the value $I_t(x,y,t)$ transmitted after attenuation at a point $(x,y)$ and at time t is related to the initial value at the same point and at that time t by the relation:

$$I_t(x,y,t) = a_0 I_0(x,y,t) + a_{-1} I_0(x,y,t-T) + a_1 I_0(x,y,t-T)$$

where:

T is the recurrence period of the frame,

$a_0 = (1+a)/2$

$a_{-1} = (1-a)/2$

a being the amount of attenuation to be obtained for frequency $f_0/n$, wherein n is the number of fields corresponding to the amount of time opening,

and in that the amount of enhancement is such that the value $I_t(x,y,t)$ is related to the transmitted value $I_t(x,y,t)$ by the relation

$$I_r(x,y,t) = b_0 I_t(x,y,t) + b_{-1} I_r(x,y,t-T)$$

where $b_0 = 1/a_0$ and $b_{-1} = 1/b_0$

a having different values for the high frequency spatial energy and lower frequency spatial energy.

7. Method according to claim 5, characterized in that the degree of attenuation is from 0 to 6 dB for the low frequency energy and is of from 1 to 10 dB for the high frequency energy.

8. A system for broadcasting high definition television programs implementing the method according to any one of claims 1-7, comprising a transmitter and a high definition receiver, characterized in that transmitter comprises, between a high definition encoder and a transmission modulator, a time attenuation module and in that the receiver comprises a time enhancement module (230) located between the demodulator and the high definition decoder, each of the modules comprising at least two channels corresponding to different frequencies in the spectrum of the spatial frequencies of the image and discriminators ($231_0$, $231_1$) for distribution of energy corresponding to said frequencies which are different in the channels, the number of discriminators ($230_0$, $231_1$) corresponding to the number of fields representing the time opening on which attenuation and enhacement are carried out, the degree of enhancement in the receiver corresponding to the degree of attenuation in the transmitter.

9. Receiver for receiving high definition television programs transmitted by the process according to any one of claims 1-7, comprising reception and demodulation circuits, a time enhancement module (230) and a high definition recorder, characterized in that the enhancement module comprises at least two channels corresponding to different frequencies in the spectrum of the spatial frequencies of the image and discriminators ($231_0$, $231_1$) for distributing energy corresponding to said different frequencies between said channels, whose number corresponds to the amount of time opening over which enhancement is carried out, and a digital output summer, and in that each channel is constituted of multipliers each receiving an output of the respective discriminator and corresponding to said different frequencies associated with the respective channel, and each multiplying the output by an enhancement coefficient ($b_{01}, b_{02}, b_{11}, b_{12}$), and an output summer, the coefficients being lower for the higher spatial frequencies of the image.

FIG.1.

FIG. 2.

FIG. 3.

FIG.4.

230

246 — MI (t_T)

231₁

x b₁₁

+

236

du démodul.

231₀

x b₀₁

S₁

+

S₀

Vers
décodeur
HD

234

x b₁₂

+

238

x b₀₂

260

EP 0 408 460 B1

9